(19) Europäisches Patentamt / European Patent Office / Office européen des brevets

(11) EP 4 752 961 A1

(12) **EUROPEAN PATENT APPLICATION**

(43) Date of publication:
03.06.2026 Bulletin 2026/23

(21) Application number: 25219330.5

(22) Date of filing: 28.11.2025

(51) International Patent Classification (IPC):
$H01M\ 4/134^{(2010.01)}$  $H01M\ 4/36^{(2006.01)}$
$H01M\ 4/38^{(2006.01)}$  $H01M\ 4/583^{(2010.01)}$
$H01M\ 4/587^{(2010.01)}$  $H01M\ 4/62^{(2006.01)}$
$H01M\ 4/133^{(2010.01)}$

(52) Cooperative Patent Classification (CPC):
H01M 4/364; H01M 4/133; H01M 4/134;
H01M 4/366; H01M 4/386; H01M 4/587;
H01M 4/625; H01M 2004/021; H01M 2004/027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 29.11.2024 KR 20240175701
29.11.2024 KR 20240175705

(71) Applicant: SAMSUNG SDI CO., LTD.
Yongin-si, Gyeonggi-do 17084 (KR)

(72) Inventors:
• Cho, Hang In
16678 Gyeonggi-do, Suwon-si (KR)
• Cha, Yu Rim
16678 Gyeonggi-do, Suwon-si (KR)
• Oh, Se Young
16678 Gyeonggi-do, Suwon-si (KR)
• Yu, So Jeong
16678 Gyeonggi-do, Suwon-si (KR)

(74) Representative: Meissner Bolte Partnerschaft mbB
Patentanwälte Rechtsanwälte
Postfach 86 06 24
81633 München (DE)

(54) **NEGATIVE ELECTRODE PLATE FOR RECHARGEABLE LITHIUM BATTERY AND RECHARGEABLE LITHIUM BATTERY INCLUDING THE SAME**

(57) A negative electrode plate for a rechargeable lithium battery and a rechargeable lithium battery including the same are disclosed. A negative electrode plate for a rechargeable lithium battery includes a negative electrode active material including a mixture of a first negative electrode active material, a second negative electrode active material, and a third negative electrode active material. The first negative electrode active material includes natural graphite including secondary particles (3) in which primary particles (1) are assembled and a coating layer (7) that surrounds the secondary particles and includes amorphous carbon, and the first negative electrode active material has an orientation degree of 90 or less and a d002 of 3.356 to 3.360 Å; the second negative electrode active material includes artificial graphite; and the third negative electrode active material includes a core (4) including silicon nanoparticles (2) and amorphous carbon, and an amorphous carbon coating layer (6) that surrounds the core and includes amorphous carbon.

FIG. 1.

**Description**

**CROSS-REFERENCE TO RELATED APPLICATIONS**

The present application claims priority to and the benefit of Korean Patent Application No.10-2024-0175701, filed on November 29, 2024 in the Korean Intellectual Property Office, and Korean Patent Application No.10-2024-0175705, filed on November 29, 2024, in the Korean Intellectual Property Office.

**BACKGROUND**

**1. Field**

The present invention relates to a negative electrode plate for a rechargeable lithium battery, and a rechargeable lithium battery including the same.

**2. Discussion of Related Art**

Recently, with the rapid spread of electronic devices, such as mobile phones, notebook computers, and electric vehicles, using batteries, the demand for secondary batteries having high energy density and high capacity is rapidly increasing. Therefore, research and development for improving the performance of rechargeable lithium batteries is actively being conducted.

A rechargeable lithium battery is a battery including a positive electrode and a negative electrode that contain an active material capable of the intercalation and deintercalation of lithium ions and produces electric energy by oxidation and reduction reactions when the lithium ions are intercalated into and deintercalated from the positive electrode and the negative electrode.

**SUMMARY**

According to an aspect of the present invention, a negative electrode plate for a rechargeable lithium battery, which exhibits high energy density and boost charging performance, is provided.

According to another aspect of the present invention, a negative electrode plate for a rechargeable lithium battery, which exhibits a reduction in swelling of a silicon-based active material, a reduction in fast charging time, an extended cycle life, and high energy density, is provided.

According to another aspect of the present invention, a rechargeable lithium battery including the above-described negative electrode plate is provided.

According to the present invention, a negative electrode plate for a rechargeable lithium battery includes: a negative electrode active material including a mixture of a first negative electrode active material, a second negative electrode active material, and a third negative electrode active material. The first negative electrode active material includes natural graphite containing a secondary particle in which primary particles are assembled, and a coating layer that surrounds the secondary particle and contains amorphous carbon. The first negative electrode active material has an orientation degree of 90 or less and a d002 in a range from 3.356 Å to 3.360 Å. The second negative electrode active material includes artificial graphite. The third negative electrode active material includes a core containing silicon nanoparticles and amorphous carbon, and an amorphous carbon coating layer that surrounds the core and contains amorphous carbon.

According to the present invention, a rechargeable lithium battery includes the above-described negative electrode plate for a rechargeable lithium battery; and a positive electrode.

The negative electrode plate for a rechargeable lithium battery according to the present invention can provide boost charging performance, thereby achieving excellent rechargeable lithium battery performance.

The negative electrode plate for a rechargeable lithium battery according to the present invention can provide a reduction in swelling of a silicon-based active material, a reduction in fast charging time, an extended cycle life, and high energy density, thereby achieving excellent rechargeable lithium battery performance.

**BRIEF DESCRIPTION OF THE DRAWINGS**

The above and other aspects, objects, features, and advantages of the present invention will become more apparent to those of ordinary skill in the art by describing some embodiments thereof in further detail with reference to the accompanying drawings, in which:

FIG. 1 is a schematic diagram of a first negative electrode active material according to an embodiment;

FIG. 2 is a schematic diagram of a third negative electrode active material according to an embodiment;

FIG. 3 is a schematic diagram illustrating an interparticle distance in the third negative electrode active material; and

FIGS. 4 to 7 are views schematically illustrating a rechargeable lithium battery according to some embodiments.

## DETAILED DESCRIPTION

Herein, some embodiments of the present invention will be described in further detail. However, the embodiments are presented as examples, and the present invention is not limited thereto, and the present invention is to be defined by the scope of the claims.

Unless otherwise specified herein, when a part, such as a layer, a film, an area, a plate, etc., is said to be "on" another part, it includes not only a case in which it is directly on the other part, but also a case in which one or more other parts are present therebetween.

Unless otherwise specified herein, the singular may also include the plural. In addition, unless otherwise specified. "A or B" may mean "including A," "including B," or "including A and B."

In this specification, "a combination thereof" may mean a mixture, a laminate, a composite, a copolymer, an alloy, a blend, and/or a reaction product of the components.

Unless otherwise defined herein, the particle size may be an average particle diameter. In addition, the particle size refers to the average size diameter (D50), which is the diameter of particles with a cumulative volume of 50 vol% in the particle size distribution. The average particle size (D50) may be measured by a well-known method to those skilled in the art, for example, using a particle size analyzer, a transmission electron micrograph, or a scanning electron micrograph. As another method, the average particle size may be measured using a measurement device using dynamic light scattering, and an average particle size (D50) value may be obtained by performing data analysis, counting the number of particles in each particle size range, and then calculating the D50 value therefrom. Alternatively, the average particle size may be measured using a laser diffraction method. When measuring the average particle size by the laser diffraction method, more specifically, the average particle size (D50) may be calculated based on 50% of the particle size distribution after dispersing the target particles in a dispersion medium, introducing the particles into a commercially available laser diffraction particle size measuring device (such as MT 3000 from Microtrac), and irradiating the particles with ultrasonic waves of about 28 kHz at an output of 60 W.

When the particle is spherical, the size may mean a diameter.

The negative electrode plate for a rechargeable lithium battery according to one or more embodiments may provide (e.g., simultaneously provide) an extended cycle life, high energy density, boost charging performance, and improved expansion characteristics.

The negative electrode plate for a rechargeable lithium battery according to the invention includes a negative electrode active material, wherein the negative electrode active material includes a mixture of a first negative electrode active material, a second negative electrode active material, and a third negative electrode active material. In one or more embodiments, the first negative electrode active material includes natural graphite containing a secondary particle in which primary particles are assembled, or arranged, and a coating layer that surrounds the secondary particle and contains amorphous carbon, and has an orientation degree of 90 or less and a d002 in a range from 3.356 Å to 3.360 Å; the second negative electrode active material includes artificial graphite; and the third negative electrode active material includes a core containing silicon nanoparticles and amorphous carbon, and an amorphous carbon coating layer that surrounds the core and contains amorphous carbon.

The negative electrode plate for a rechargeable lithium battery may include the mixture as a negative electrode active material, thereby providing high capacity retention, high energy density, boost charging performance, and a lifespan improvement effect.

In an embodiment, the mixture may be included at 95 wt% or more, for example, 95 to 100 wt%, 99 to 100 wt%, or 100 wt% of total negative electrode active material of the negative electrode plate.

In an embodiment, the negative electrode active material, for example, the mixture, may be included at 90 to 99.5 wt%, for example, 95 to 99.5 wt%, or 90 to 99 wt% of the negative electrode plate. Within the above range, a capacity improvement effect may be achieved.

If the mixture does not contain the first negative electrode active material, the low electrode plate density makes it difficult to implement a cell with high energy density, and boost charging performance can be degraded.

If the mixture does not contain the second negative electrode active material, an extended cycle life effect may not be exhibited in a high temperature environment.

If the mixture does not contain the third negative electrode active material, the increase in capacity per volume may be reduced.

In an embodiment, in the mixture, the first negative electrode active material may be included at 20 to 75 wt%, for example, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, or 75 wt%, and, in an embodiment, 20 to 65 wt%, or 20 to 60 wt%, the second negative electrode active material may be included at 20 to 75 wt%, for example, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, or 75 wt%, and, in an embodiment, 20 to 65 wt%, or 20 to 60 wt%, and the third negative electrode active material may be included at 1 to 20 wt%, for example, 1, 2, 3, 4, 5, 6, 7, 8, 9, 10, 11, 12, 13, 14, 15, 16, 17, 18, 19, or 20 wt%, and, in an embodiment, 1 to 15 wt%, 1 to 10 wt%, or 5 to 7 wt%. Within the above ranges, boost charging performance can be provided, and an effect of enhancing fast charging cycle life can be further improved.

In an embodiment, in the mixture, the third negative electrode active material may be included at 1 to 15 wt%, for example, 1, 2, 3, 4, 5, 6, 7, 8, 9, 10, 11, 12, 13, 14, or 15 wt%, the total of the first negative electrode active material and the second negative electrode active material may be 85 to 99 wt%, for example, 85, 86, 87, 88, 89, 90, 91, 92, 93, 94, 95, 96, 97, 98, or 99 wt%, and, in an embodiment, 86 to 99 wt%, and the weight ratio of the first negative electrode active material to the second negative electrode active material may be in a range from 10:90 to 90:10, for example, 25:75 to 75:25, or 50:50 with respect to 100 parts by weight of the total of the first negative electrode active material and the second negative electrode active material. Within the above ranges, boost charging performance and an effect of enhancing fast charging cycle life can be achieved.

In an embodiment, the density of the negative electrode plate may be 1.3 to 1.7 g/cc, for example, 1.3 to 1.68 g/cc. Within the above range, high energy density and faster charging performance can be achieved.

Herein, each component of the negative electrode active material will be described in further detail.

## (1) First negative electrode active material

A first negative electrode active material includes natural graphite containing a secondary particle in which primary particles are assembled, or arranged, and a coating layer that surrounds the secondary particle and contains amorphous carbon. The first negative electrode active material has an orientation degree of 90 or less, and a d002 of 3.356 Å to 3.360Å.

"Orientation degree" as used herein may refer to the ratio of the diffraction peak intensity I (002) of the (002) plane to the diffraction peak intensity I (110) of the (110) plane, as measured by X-ray diffraction analysis using Cu Kα radiation.

"d002" as used herein may refer to the interplanar spacing of the (002) plane of the first negative electrode active material, as measured by X-ray diffraction analysis using Cu Kα radiation.

Generally, natural graphite has advantages as a negative electrode active material for a battery, but a high resistance thereof may result in poor charging characteristics. Additionally, due to a large number of internal pores thereof, side reactions may adversely affect the extended cycle life and expansion rate.

The first negative electrode active material is prepared by significantly reducing the average particle diameter of secondary particles of natural graphite into a fine particle form so as to provide low resistance, and to offset the reduction in efficiency caused by the increased specific surface area of the secondary particles, is calcined at the temperature described below, thereby reducing the specific surface area and providing (e.g., simultaneously providing) high efficiency.

In this regard, the first negative electrode active material includes the natural graphite, the amorphous carbon, and the coating layer, and satisfies the above orientation degree and d002. Through this, the first negative electrode active material improves the capacity of a battery and significantly increases a charge C-rate, thereby increasing the boost charging performance of the rechargeable lithium battery. Although the first negative electrode active material includes natural graphite, the first negative electrode active material can significantly reduce resistance, and provide high energy density, suppression of side reactions with the electrolyte, and an improved lifespan.

As the orientation degree decreases, the edge planes of natural graphite become oriented in random directions, thereby increasing the random orientation of the negative electrode active material. Accordingly, this facilitates the intercalation and deintercalation of lithium ions into the natural graphite secondary particles, thereby improving the capacity characteristics of a rechargeable lithium battery. In an embodiment, for example, the orientation degree may be 80 or less, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, or 80. In a preferred embodiment, the first negative electrode active material has an orientation degree in the range from 10 to 80, 20 to 80, 30 to 80, 40 to 80, or 50 to 80. The orientation degree may be obtained by adjusting the average particle diameter (D50) of the secondary particles and the major axis length of the primary particles. In the first negative electrode active material, the average particle diameter (D50) of the secondary particles may be significantly reduced to reduce the high resistance of natural graphite.

In an embodiment, as will be described below, the average particle diameter (D50) of the secondary particles in the first negative electrode active material is significantly smaller than a major axis length of the primary particles. In an embodiment, the secondary particles may be produced by crumpling the primary particles. In an embodiment, the first negative electrode active material may include amorphous carbon and may be produced by thermal treatment at 2500 °C or more as described below, thereby achieving a high degree of graphitization. A high degree of graphitization may contribute to improving the capacity of the negative electrode active material, and preventing or substantially preventing a decrease in efficiency caused by a reduction in the average particle diameter of secondary particles and an increase in the specific surface area. In an embodiment, the d002 of the first negative electrode active material is 3.356 Å to 3.360 Å. Within the above range, the decrease in battery efficiency caused by the increase in specific surface area of the first negative electrode active material including the secondary particles having a relatively small average particle diameter (D50) can be offset and high capacity can be provided. In an embodiment, for example, the d002 may be 3.356, 3.3561, 3.3562, 3.3563, 3.3564, 3.3565, 3.3566, 3.3567, 3.3568, 3.3569, 3.357, 3.3571, 3.3572, 3.3573, 3.3574, 3.3575, 3.3576, 3.3577, 3.3578, 3.3579, 3.358, 3.3581, 3.3582, 3.3583, 3.3584, 3.3585, 3.3586, 3.3587, 3.3588, 3.3589, 3.359, 3.3591, 3.3592, 3.3593, 3.3594, 3.3595, 3.3596, 3.3597, 3.3598, 3.3599, or 3.360 Å.

According to an embodiment, the first negative electrode active material may have a Hg cumulative pore volume of 0.01 to 0.06 mL/g, for example, 0.01, 0.02, 0.03, 0.04, 0.05, or 0.06 mL/g, and, in an embodiment, 0.02 to 0.06 mL/g, or 0.03 to 0.06 mL/g. Within the above range, due to small pores, that is, voids, in the first negative electrode active material and the appropriate content of the amorphous carbon therein, significantly higher negative electrode active material efficiency can be achieved. In addition, the internal area of the first negative electrode active material where the reaction with the electrolyte occurs is not excessively large and maintains a sufficient density that allows the electrolyte to be well impregnated, thereby ensuring an appropriate lifespan without excessive side reactions. The Hg cumulative pore volume may be a characteristic of the negative electrode active material prepared by a preparation method to be described below to reduce the specific surface area while including small particles of natural graphite.

According to an embodiment, the first negative electrode active material may have a sphericity (S) of 0.85 or more according to Equation 1 below:

$$Sphericity\ (S) = 4\pi \times A/B^2,$$

where, in Equation 1, A is the area of the first negative electrode active material, and B is the perimeter of the first negative electrode active material.

In an embodiment, B may be the perimeter of the actual shape of the first negative electrode active material.

The sphericity of the first negative electrode active material may be a value obtained when projecting a three-dimensional particle onto a two-dimensional plane. For example, the sphericity may be the ratio of the outline of a real particle and the outline of the circle with the same area as the real one.

In Equation 1, the area A indicates the area of a circle with a circumference, which is the same as the actual perimeter B of particles that has been obtained through the SEM image of an electrode cross-section using a controlled pressure scanning electron microscope (CP-SEM) and calculating the actual perimeter of the particle from the cross-sectional image through the Image J program. In an embodiment, the actual perimeter may refer not only to the perimeter when the particle has a perfectly spherical shape, but also the length obtained along the perimeter even when the particle is not perfectly spherical and has uneven regions.

In an embodiment, the sphericity of the first negative electrode active material may be 0.85, 0.86, 0.87, 0.88, 0.89, 0.90, 0.91, 0.92, 0.93, 0.94, 0.95, 0.96, 0.97, 0.98, 0.99, or 1.0, and, in an embodiment, 0.90 to 1.0, 0.90 to 0.98, or 0.90 to 0.95. When the sphericity falls within the above range, the expansion rate during charging and discharging may be effectively inhibited.

In an embodiment, the first negative electrode active material may have a pellet density of 1.60 to 1.80g/cc. Within the above range, the internal pores and side reactions with the electrolyte of the first negative electrode active material can be reduced, thereby improving lifespan characteristics. For example, the pellet density may be 1.60, 1.61, 1.62, 1.63, 1.64, 1.65, 1.66, 1.67, 1.68, 1.69, 1.70, 1.71, 1.72, 1.73, 1.74, 1.75, 1.76, 1.77, 1.78, 1.79, or 1.80 g/cc, and, in an embodiment, 1.70 to 1.80 g/cc.

In an embodiment, the first negative electrode active material may have a tap density of 0.75 to 1.20 g/cc, for example, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1.00, 1.01, 1.02, 1.03, 1.04, 1.05, 1.06, 1.07, 1.08, 1.09, 1.10, 1.11, 1.12, 1.13, 1.14, 1.15, 1.16, 1.17, 1.18, 1.19, or 1.20 g/cc, and, in an embodiment, 0.75 to 1.0 g/cc, or 0.95 to 1.20 g/cc. Within the above range, the internal pores and side reactions with the electrolyte of the first negative electrode active material can be reduced, and the lifespan characteristics can be improved. The tap density may be obtained by calculating a mean value by performing a process of applying a pressure of 108 N three times using a GeoPyc 1360 Pycnometer (Micromeritics) having a conversion factor of 0.2907 cm$^3$/mm and a chamber with a diameter of 19.1 mm.

In an embodiment, the first negative electrode active material may have a specific surface area of 10 m$^2$/g or less, for example, 1, 1.5, 2, 2.5, 3, 3.5, 4, 4.5, 5, 5.5, 6, 6.5, 7, 7.5, 8, 8.5, 9, 9.5, or 10 m$^2$/g, and, in an embodiment, 1 to 10 m$^2$/g. Within the above range, the internal pores of the first negative electrode active material and side reactions with the electrolyte can be reduced and the lifespan characteristics can be improved. The specific surface area may be a BET specific surface area. The BET specific surface area may be measured using Macsorb HM Model-1208 (MOUNTECH).

In an embodiment, the internal porosity of the first negative electrode active material may be 2% or less, for example, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2%, and, in an embodiment, 1.8% or less, 1.5% or less, 1.0 to 1.5%, or 1.0 to 1.3%. Within the above range, side reactions of the first negative electrode active material with the electrolyte can be inhibited, thereby improving the lifespan of the rechargeable lithium battery. The total pore volume and mesopore volume of the porosity may be quantitatively measured using Barrett-Joyner-Halenda (BJH) analysis equipment.

Herein, the composition of the first negative electrode active material will be described in further detail.

The first negative electrode active material includes natural graphite containing secondary particles in which primary particles are assembled; and a coating layer that surrounds the secondary particle and includes amorphous carbon.

The natural graphite may be flaky, or flake-shaped (e.g., needle-shaped or scale-shaped) natural graphite.

In an embodiment, the primary particles may have a major axis length of 10 to 200 $\mu$m, for example, 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, or 200 $\mu$m, and, in an embodiment, 10 to 100 $\mu$m, 30 to 60 $\mu$m, or 20 to 50 $\mu$m. Within the above range, the assembly into secondary particles can be easily performed, and the secondary particles can easily achieve a ratio to be described below.

Here, "major axis length" refers to the length of the longest axis between facing sides when the primary particles are formed in a plate shape.

In an embodiment, the primary particles may be formed in a plate shape, but the present invention is not limited thereto.

In an embodiment, the average particle diameter (D50) of the secondary particles may be 30 $\mu$m or less. Within the above range, the secondary particles can easily achieve a ratio to be described below. For example, the average particle diameter (D50) of the secondary particles may be 5 $\mu$m or more and 10 $\mu$m or less, for example 5, 6, 7, 8, 9, or 10 $\mu$m, and, in an embodiment, 6 $\mu$m or more and less than 8 $\mu$m. Within the above range, the secondary particles can easily achieve the above orientation degree and sphericity.

The secondary particles may be spherical, but the present invention is not limited thereto.

In an embodiment, the ratio of the major axis length of the primary particles to the average particle diameter (D50) of the secondary particles may be greater than 2 and 10 or less. Within the above range, the resistance of the active material cannot increase, and boost charging performance cannot be reduced. For example, the ratio may be 2.1, 2.5, 3, 3.5, 4, 4.5, 5, 5.5, 6, 6.5, 7, 7.5, 8, 8.5, 9, 9.5, or 10, and, in an embodiment, 3 to 6, 4 to 6, or 5 to 6. Within the above range, the secondary particles can easily achieve the above orientation degree and sphericity.

The amorphous carbon may be contained in the coating layer surrounding the surface of the secondary particle. The amorphous carbon may reduce the internal porosity of the negative electrode active material and inhibit side reactions of the negative electrode active material with the electrolyte, thereby improving rate capability.

In an embodiment, the thickness of the coating layer containing the amorphous carbon may be 5 to 50 nm, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 nm, and, in an embodiment, 10 to 50 nm, or 20 to 50 nm. Within the above range, side reactions with the electrolyte can be inhibited, and rate capability can be improved.

The amorphous carbon may be a mixture of one or more of soft carbon, hard carbon, mesophase pitch carbide, and calcined coke.

The amorphous carbon may be additionally present even on the surface of the primary particle.

In an embodiment, the natural graphite and the amorphous carbon may be included in a weight ratio of 90:10 to 75:25, for example, 90:10 to 80:20, 90:10 to 85:15, or 90:10 to 88:12 with respect to 100 parts by weight of the total of the natural graphite and the amorphous carbon in the first negative electrode active material. Within the above range, side reactions with the electrolyte can be inhibited, and rate capability can be improved.

Herein, a method of preparing the first negative electrode active material will be described.

    (1) Primary particles having the above major axis length were obtained by grinding a natural graphite raw material having an average particle diameter (D50) of 120 $\mu$m or more. In an embodiment, the natural graphite raw material may be ground by applying an air jet milling method. The air jet milling may include grinding the natural graphite raw material at room temperature under a condition of 5 to 20 kg/cm$^2$.

    (2) The primary particles are assembled into secondary particles using spheroidization equipment.

The assembly is a process for reaching a sphericity of 0.85 or more, and may be achieved using a high-strength mixer equipped with a high-speed rotating rotor and a stator. In the spheroidization process, the average particle diameter (D50) of the secondary particles can be adjusted by varying a pressure, a shear rate or the like.

(3) The prepared secondary particles are mixed with an amorphous carbon precursor.

The amorphous carbon precursor is not particularly limited as long as it is a material that forms a carbide. For example, the precursor may include one or more of a phenolic resin, a furan resin, an epoxy resin, a polyacrylonitrile resin, a polyamide resin, a polyimide resin, a polyamideimide resin, synthetic pitch, petroleum pitch, coal pitch, and tar.

During the mixing, the natural graphite and the amorphous carbon in the final product, that is, the negative electrode active material, may be added to be present in the above-described weight ratio.

(4) The first negative electrode active material is obtained by calcining and thermally treating the mixture obtained by the mixing.

In an embodiment, the thermal treatment may be performed at 2500 °C or more, for example, 2500 °C to 3500 °C, for example, 2500 °C to 3000 °C. Within the above range, the negative electrode active material including secondary particles satisfying the above-mentioned ratio can easily reach the above orientation degree, d002, and sphericity.

The thermal treatment may be maintained for 1 to 5 hours, for example, 1 to 4 hours, 1 to 3 hours, or 2 to 3 hours.

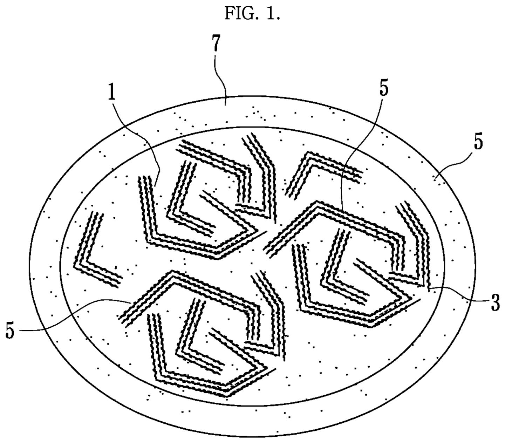

FIG. 1 is a schematic diagram of a first negative electrode active material according to an embodiment.

Referring to FIG. 1, the first negative electrode active material includes natural graphite including secondary particles 3 in which a plurality of primary particles 1 are assembled, or arranged; amorphous carbon 5 present on the surface of the primary particles, and a coating layer 7 that surrounds the secondary particle 3 and includes the amorphous carbon 5. Referring to FIG. 1, as the secondary particles 3 are assembled by spherically forming the primary particles 1 in a curved shape, natural graphite has a smaller size and a dense internal structure, such that the internal pores may be minimized or reduced, side reactions with the electrolyte may be reduced, and the cycle life may be improved.

### (2) Second negative electrode active material

In an embodiment, the artificial graphite may have an average particle diameter (D50) of 10 $\mu$m to 20 $\mu$m, for example, 13 $\mu$m to 18 $\mu$m, or 15 $\mu$m to 20 $\mu$m. Within the above range, since the specific surface area does not increase significantly, side reactions with the electrolyte cannot increase, and boost charging performance cannot decrease.

In an embodiment, the artificial graphite may have a maximum particle diameter of 30 to 40 $\mu$m.

In an embodiment, the artificial graphite has a pellet density lower than that of the first negative electrode active material, for example, 1.1 to 1.6 g/cc, or 1.1 to 1.5 g/cc.

In an embodiment, the artificial graphite may have a tap density lower than that of the first negative electrode active material, for example, 0.5 to 1.0 g/cc, or 0.5 to 0.9 g/cc.

In an embodiment, the artificial graphite may have a specific surface area of 10 $m^2$/g or less, for example, 1 to 10 $m^2$/g. The specific surface area may be a BET specific surface area.

In an embodiment, the artificial graphite may have an orientation degree of 90 or more, for example, 90 to 100, or greater than 90 and 100 or less. The orientation degree may be measured by the above-described method.

The artificial graphite may have, but is not limited to, a spherical shape.

The artificial graphite may include one or more of single particles, primary particles, secondary particles in which primary particles are assembled, and tertiary particles in which secondary particles are assembled.

In an embodiment, the secondary particles in which primary particles are assembled may also include a coating layer including amorphous carbon on surfaces thereof.

### (3) Third negative electrode active material

A third negative electrode active material includes a core including silicon nanoparticles and amorphous carbon; and an amorphous carbon coating layer that surrounds the core and includes amorphous carbon.

In an embodiment, the third negative electrode active material may be a binary negative electrode active material containing silicon and amorphous carbon.

In an embodiment, in the third negative electrode active material, the interparticle distance between the silicon nanoparticles contained in the core may be 100 nm or less, 90 nm or less, 80 nm or less, 70 nm or less, 65 nm or less, 60 nm or less, 55 nm or less, 50 nm or less, 45 nm or less, 40 nm or less, or 35 nm or less. When the interparticle distance between the silicon nanoparticles falls within the above range, the size and total pore volume of pores included in the core can be reduced. When the interparticle distance between the silicon nanoparticles falls within the above range, the volume of pores in the third negative electrode active material can be reduced, and the permeation of the electrolyte into the core during battery operation can be prevented or substantially prevented by reducing the interparticle distance between the silicon nanoparticles. As a result, side reactions between the electrolyte and the third negative electrode active material can be inhibited, thereby improving the lifespan of a battery.

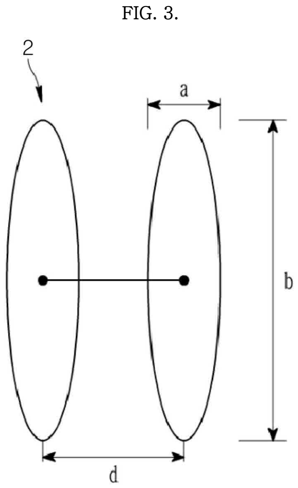

Here, the interparticle distance between the silicon nanoparticles refers to the center-to-center distance between the silicon nanoparticles. Referring to FIG. 3, each silicon nanoparticle 2 has a minor axis length a and a major axis length b, and an interparticle distance d is the center-to-center distance between the silicon nanoparticles 2.

The interparticle distance between the silicon nanoparticles may mean that the number of silicon nanoparticles having an interparticle distance in the above range is 50% to 100%, for example, 60% to 100%, 70% to 100%, or 80% to 100% of the total number of silicon nanoparticles included in the core.

In an embodiment, the average particle diameter (D50) of the silicon nanoparticles may be 50 nm to 150 nm, for example 50 nm or more, 60 nm or more, 70 nm or more, or 80 nm or more, and 150 nm or less, 140 nm or less, 130 nm or less, or 115 nm or less. When the average particle diameter (D50) of the silicon nanoparticles falls within the above range, side reactions with the electrolyte can be inhibited and the expansion of the silicon nanoparticles can be reduced, thereby improving the initial efficiency and lifespan characteristics.

In an embodiment, the silicon nanoparticles may have a full width at half maximum (FWHM) of an X-ray diffraction angle ($2\theta$) using CuK$\alpha$ radiation on the (111) plane in the range of 0.3° to 7°. Accordingly, lifespan characteristics may be improved.

The full width at half maximum (FWHM) of the X-ray diffraction angle ($2\theta$) using CuK$\alpha$ radiation on the (111) plane of the silicon nanoparticle may be adjusted by adjusting the sizes of the silicon particles or changing a process of producing the silicon nanoparticles.

In an embodiment, the aspect ratio of the silicon nanoparticle may be 2 to 8, for example, 2 to 6, the minor axis length a of the silicon nanoparticle may be 20 nm to 50 nm, and the major axis length b may be 50 nm to 300 nm. When the aspect ratio, major axis length b and minor axis length a of the silicon nanoparticle fall into the above-mentioned ranges, side reactions of the third negative electrode active material with the electrolyte may be inhibited, and the expansion of the silicon nanoparticle may be reduced, thereby improving the initial efficiency and lifespan characteristics.

In an embodiment, the silicon nanoparticle may be included at 20 wt% to 80 wt%, 30 wt% to 70 wt%, 30 wt% to 60 wt%, or 30 wt% to 50 wt% with respect to the total weight of the third negative electrode active material. When the content of the silicon nanoparticles falls within the above range, battery capacity can be improved.

The amorphous carbon contained in the core may be soft carbon, hard carbon, mesophase pitch carbide, calcined coke, or a combination thereof.

When the core contains amorphous carbon, the pore volume of the third negative electrode active material may be reduced, thereby inhibiting side reactions with an electrolyte. In addition, if the silicon nanoparticles in the third negative electrode active material expand, this can be buffered to suppress cell swelling. In addition, as the amorphous carbon functions as a binder, the fracture of the third negative electrode active material is mitigated, thereby maintaining the shape of the third negative electrode active material well.

In an embodiment, the coating layer contains amorphous carbon and may have a thickness of 1 nm to 900 nm, for example, 5 nm to 800 nm. To this end, the specific surface area of the third negative electrode active material may be reduced, and the inflow of electrolyte into the third negative electrode active material may be prevented or substantially prevented. As a result, side reactions with the electrolyte may be minimized or reduced, and the lifespan characteristics of the battery may be improved.

The amorphous carbon contained in the coating layer may be soft carbon, hard carbon, mesophase pitch carbide, calcined coke, or a combination thereof, and may be a compound which is the same as or different from the amorphous carbon contained in the core.

In an embodiment, the amorphous carbon may be contained at 20 wt% to 80 wt%, for example, 20 wt% to 70 wt%, 20 wt% to 60 wt%, 20 wt% to 50 wt%, or 20 wt% to 40 wt% with respect to the total weight of the third negative electrode active material. When the content of the amorphous carbon falls within the above range, side reactions of the third negative electrode active material with the electrolyte can be inhibited.

The average particle size (D50) of the third negative electrode active material according to an embodiment may be 2 $\mu$m to 15 $\mu$m, for example, 3 $\mu$m to 13 $\mu$m, or 5 $\mu$m to 10 $\mu$m. When the average particle size of the third negative electrode active material falls within the above range, lithium ions can easily diffuse into the third negative electrode active material, and the resistance and charge/discharge rate characteristics of the battery can be improved. In addition, side reactions with the electrolyte can be reduced by inhibiting an excessive increase in specific surface area of the third negative electrode active material.

The average particle size (D50) of the third negative electrode active material may be appropriately adjusted by adjusting the crushing and grinding conditions during the preparation of the third negative electrode active material.

In an embodiment, the third negative electrode active material may have a total pore volume of pores with a size of 200 nm or less in a range of $3.0 \times 10^{-2}$ cm$^3$/g or less, for example, $2.5 \times 10^{-2}$ cm$^3$/g or less, $2.3 \times 10^{-2}$ cm$^3$/g or less, $2.0 \times 10^{-2}$ cm$^3$/g or less, $1.9 \times 10^{-2}$ cm$^3$/g or less, $1.8 \times 10^{-2}$ cm$^3$/g or less, $1.7 \times 10^{-2}$ cm$^3$/g or less, $1.6 \times 10^{-2}$ cm$^3$/g or less, $1.5 \times 10^{-2}$ cm$^3$/g or less, $1.4 \times 10^{-2}$ cm$^3$/g or less, $1.3 \times 10^{-2}$ cm$^3$/g or less, $1.2 \times 10^{-2}$ cm$^3$/g or less, $1.1 \times 10^{-2}$ cm$^3$/g or less, $1.0 \times 10^{-2}$ cm$^3$/g or less, $0.9 \times 10^{-2}$ cm$^3$/g or less, $0.8 \times 10^{-2}$ cm$^3$/g or less, $0.7 \times 10^{-2}$ cm$^3$/g or less, $0.6 \times 10^{-2}$ cm$^3$/g or less, or $0.5 \times 10^{-2}$ cm$^3$/g or less. Within the above range, side reactions between the electrolyte and the silicon nanoparticles can be inhibited, thereby improving the initial efficiency and lifespan characteristics.

The total pore volume of the pores with a size of 200 nm or less can be quantitatively measured using Barrett-Joyner-Halenda (BJH) analysis equipment.

In an embodiment, the pore size of the third negative electrode active material may be 200 nm or less, for example, 170 nm or less, 150 nm or less, 130 nm or less, 100 nm or less, or 50 nm or less. When the pore size is controlled within the above range, the side reactions between the electrolyte and the silicon nanoparticles can be reduced, and a battery with improved initial efficiency and lifespan characteristics can be obtained.

In an embodiment, the BET specific surface area of the third negative electrode active material may be 10 $m^2$/g or less. When the BET specific surface area falls within the above range, the efficiency characteristics of the battery can be improved by inhibiting side reactions with the electrolyte.

In an embodiment, in the third negative electrode active material, the silicon nanoparticles and the amorphous carbon may be contained at a weight ratio of 80:20 to 20:80, for example, 70:30 to 30:70, 70:30 to 40:60, or 70:30 to 50:50 with respect to a total of 100 parts by weight of the silicon nanoparticles and the amorphous carbon. When the contents of the silicon nanoparticles and the amorphous carbon fall within the above range, the volume of the internal pores can be reduced, and the amorphous carbon can uniformly (uniformly or substantially uniformly) diffuse in and on the surface of the third negative electrode active material. As a result, the side reactions with the electrolyte can be inhibited, and the performance of the third negative electrode active material can be improved.

A method of preparing the third negative electrode active material according to an embodiment will be described.

The method of preparing the third negative electrode active material includes a process of preparing a mixture by mixing and dispersing the silicon nanoparticles and the amorphous carbon; a process of preparing a molded body through pressing after spraying and drying the mixture; and a process of thermally treating the molded body.

A mixture is prepared by mixing and dispersing silicon nanoparticles and amorphous carbon. The silicon nanoparticles and the amorphous carbon are described above.

A molded body is produced by pressing after spraying and drying the prepared mixture.

The drying may be performed at 50 °C to 150 °C using a spray dryer.

In an embodiment, the pressing may be performed under a pressure of 50 MPa to 150 MPa, for example, 75 MPa to 150 MPa or 75 MPa to 125 MPa. When the molded body is pressed within the above pressure range, the distance between silicon nanoparticles may be appropriately maintained, and the pore volume formed in the third negative electrode active material is controlled, thereby inhibiting side reactions between the electrolyte and the silicon nanoparticles and improving the initial efficiency and lifespan characteristics.

The third negative electrode active material is prepared by thermally treating the resulting molded body.

In an embodiment, the thermal treatment may be performed at 700 °C to 1100 °C, for example, 800 °C to 1050 °C, or 900 °C to 1000 °C. When the thermal treatment is performed within the above temperature range, the amorphous carbon is carbonized, thereby improving the strength of the third negative electrode active material. In addition, the conductivity of the third negative electrode active material may be improved, thereby improving the initial efficiency of the battery.

The thermal treatment may be performed in a furnace with a nitrogen ($N_2$) atmosphere.

In an embodiment, the third negative electrode active material may have a sphericity of 0.7 or more, or 1.0 or less. The sphericity refers to, when the third negative electrode active material has a circular or elliptical shape, the ratio (Lb/La) of the minor axis length (Lb) to the major axis length (La).

In an embodiment, the third negative electrode active material may have an elliptical or circular cross-section. Accordingly, a sphericity of 1.0 means that the negative electrode active material is virtually perfectly spherical, and it will be understood by those of ordinary skill in the art that the maximum value of sphericity is 1.0 and cannot exceed 1.0.

In an embodiment, the sphericity of the third negative electrode active material is 0.7 or more, and the surface area of the negative electrode active material may be reduced, which reduces the area where the negative electrode active material comes into contact with the electrolyte or lithium. Therefore, side reactions with the electrolyte may be reduced, the reaction with lithium may also be reduced, and volume expansion may also be reduced by the uniform expansion of the negative electrode active material.

The effect caused by the reduced surface area may be more effectively shown when the BET specific surface area of the third negative electrode active material is 10 $m^2$/g, for example, 0.5 $m^2$/g to 10 $m^2$/g. When the BET specific surface area of the third negative electrode active material is 10 $m^2$/g or less, and according to an embodiment, 0.5 $m^2$/g to 10 $m^2$/g, the contact with the electrolyte may be reduced to inhibit side reactions, thereby helping to improve performance and increasing initial efficiency.

That is, since the third negative electrode active material according to an embodiment has a sphericity of 0.7 or more and a BET specific surface area of 10 $m^2$/g or less, the third negative electrode material may be an active material with reduced side reactions with the electrolyte and reduced reactions with lithium.

In the third negative electrode active material, the silicon nanoparticles are primary particles, wherein these primary particles, that is, at least one primary particle, assembled into a secondary particle may be included in a silicon-carbon composite. Therefore, the silicon-carbon composite may include secondary particles in which Si nanoparticles are assembled.

In an embodiment, the silicon nanoparticles may be formed in a flaky, or flake-like, type or a spherical type, but the present invention is not limited thereto. In addition, at least one primary particle may be assembled into a spherical secondary particle.

In an embodiment, the amorphous carbon may be disposed to cover the surface of the secondary particle. That is, the third negative electrode active material according to an embodiment may include a core containing silicon nanoparticles, and according to an example, may include a secondary particle core in which at least one primary particle as a silicon nanoparticle is assembled, or arranged, and amorphous carbon surrounding the core. In an embodiment, the core refers to a region located in the active material. Since the core is surrounded by amorphous carbon, the core refers to a region that is not exposed to the outside. Accordingly, the core may be regarded as a region located inside the amorphous carbon that surrounds it.

In addition, the amorphous carbon may be filled between the primary particles to cover the surface of the primary particle. Likewise, the amorphous carbon filled between the primary particles may reduce the pore volume of the negative electrode active material, thereby inhibiting side reactions with the electrolyte, and if the primary particles, which are silicon nanoparticles, expand, may fill the space between the particles. In addition, as the amorphous carbon filled between the primary particles functions as a binder, the negative electrode active material particles are prevented or substantially prevented from fracturing, thereby improving conductivity.

The amorphous carbon may be soft carbon, hard carbon, mesophase pitch carbide, calcined coke, or a combination thereof.

The silicon nanoparticles may be flaky, or flake-type. In other words, the silicon nanoparticles may be flake-shaped with a major axis and a minor axis. In an embodiment, the major axis/minor axis ratio, for example, width/thickness of the silicon particles may be in a range from 5 to 20. When the ratio of the major axis/minor axis of the silicon particle falls within the above range, the expansion of the Si nanoparticles can be reduced, thereby improving the initial efficiency and lifespan characteristics of a battery containing the active material.

In an embodiment, the particle diameter of the silicon nanoparticles may be 10 nm to 200 nm. The particle diameter may be the average particle diameter of the particles. Here, the average particle diameter may refer to the particle diameter (D50) measured by the cumulative pore volume. The particle diameter (D50) refers to, unless defined otherwise in the specification, the diameter of a particle at which the cumulative pore volume in the particle size distribution is 50 vol%. When the size of the Si nanoparticles falls within the above range, the side reactions between the negative electrode active material and the electrolyte can be inhibited, and the expansion of the Si nanoparticles can be reduced, thereby improving the initial efficiency and lifespan characteristics of the battery.

In an embodiment, when the silicon nanoparticles are secondary particles in which at least one primary particle are assembled, the particle diameter of the secondary particle may be 2 $\mu$m to 15 $\mu$m, or 5 $\mu$m to 10 $\mu$m. In an embodiment, the particle diameter of the primary particle may be 10 nm to 200 nm. When the average particle diameter of the negative electrode active material falls within the above range, lithium ions can easily diffuse into the negative electrode active material, and electrical resistance and rate capability can be improved.

In an embodiment, the full width at half maximum (FWHM) of the diffraction peak on the (111) plane of the silicon particles as measured by X-ray diffraction using CuK$\alpha$ radiation may be 0.3° to 7°. When the FWHM of the Si particles falls within the above range, the lifespan characteristics of the battery can be improved.

The X-ray diffraction measurement is performed using CuK$\alpha$ radiation as target radiation, and here, the measurement conditions include $2\theta = 40°$ to 50°, a scan speed (°/S) of 0.04 to 0.06, and a step size (°/step) of 0.01 to 0.03.

In an embodiment, the mixing ratio of the silicon nanoparticles and the amorphous carbon may be 8:2 to 2:8, or 7:3 to 5:5 (weight ratio). In an embodiment, the silicon nanoparticles are assembled into secondary particles, which are present in the negative electrode active material. As a result, the mixing ratio of the silicon nanoparticles and the amorphous carbon may also be regarded as the mixing ratio of the secondary particles and the amorphous carbon. When the mixing ratio of the silicon nanoparticles and the amorphous carbon falls within the above range, there may be an advantage of achieving superior capacity, particularly a higher capacity compared to a crystalline carbon negative electrode active material.

In addition, the amorphous carbon may be present as a coating layer that coats the surface of the secondary particle, and in addition to the form of the coating layer, the amorphous carbon may also be filled between the primary particles. In an embodiment, regardless of whether the amorphous carbon is filled between the primary particles, present as a coating layer, or present in any other forms, the total content of the amorphous carbon contained in the negative electrode active material may be 20 to 80 wt% with respect to a total of 100 wt% of the negative electrode active material.

In an embodiment, when the amorphous carbon is present as a coating layer that coats or surrounds the surface of the secondary particle, the amorphous carbon may be present on the surface of the secondary particle at a thickness of 1 nm to 1000 nm, for example, 30 nm to 200 nm. When the thickness of the amorphous carbon layer falls within the above range, the conductivity of the negative electrode active material can be further improved, and the contact with an electrolyte can be reduced, thereby effectively inhibiting increased resistance due to the production of a side reaction product.

In an embodiment, the particle diameter of the third negative electrode active material may be 40 $\mu$m or less, or 2

μm to 15 μm. When the particle diameter of the third negative electrode active material falls within the above range, lithium ions can easily diffuse into the negative electrode active material, which can improve the resistance and rate capability of a battery.

The third negative electrode active material according to an embodiment may be prepared through the following process.

First, silicon particles are prepared. These silicon particles may be nanoparticles, having a particle diameter of 10 nm to 200 nm. These nanoparticle silicon particles may be obtained by performing a conventional process of producing nanoparticles, such as a grinding process. The FWHM(111) of the diffraction peak on the (111) plane of the silicon nanoparticles as measured by X-ray diffraction using CuKα radiation may be 0.3° to 7°.

A silicon particle solution is prepared by dispersing the silicon particles in a solvent. As the solvent, any suitable alcohol that does not oxidize the silicon particles and is easily volatized may be used, and, for example, isopropyl alcohol, ethanol, methanol, butanol, or a combination thereof may be used. In an embodiment, the concentration of the silicon particle dispersion is 10 to 30 wt%.

The prepared silicon particle solution is spray-dried. According to the above-described process, nanometer-scale silicon particles (primary particles) are assembled to prepare micrometer-scale spherical Si secondary particles. The secondary particles may include internal pores, that is, gaps between the primary particles. According to the spray drying process, the sphericity of the negative electrode active material may be adjusted by adjusting the nozzle type and the atmosphere. That is, as the nozzle, a two-fluid nozzle that can form fine particles by mixing a two-phase fluid consisting of a liquid and gas may be used. When the two-fluid nozzle is used, fine, spherical particles may be formed, and, since the formed particle size is small, an additional grinding process is not required, allowing the spherical shape to be maintained. When a disk-type nozzle that sprays while rotating is used, large particles are formed, and due to the large-sized particles, an additional grinding process is needed and the particles are formed in various forms, such as a spherical, elliptical, or donut form. Therefore, this type of nozzle is not suitable for embodiments of the present invention.

In addition, the spray drying process is suitable when being performed under an $N_2$ atmosphere, for example, while flowing (or blowing) $N_2$ at a flow rate of 40L/min to 50L/min, or 30L/min to 40L/min. When the flow rate of $N_2$ that flows during the spray drying process falls within the above range, microparticles in a spherical form with an appropriate size may be formed. When the flow of $N_2$ is smaller than 30L/min, the sprayed products may aggregate, which is not suitable due to an increased size of the particles. When the flow rate is greater than 50 L/min, there may be a problem where the resulting particle size is too small and a large amount of fine powder is generated.

The spray drying process may be performed at 120 °C to 170 °C. When the spray drying process is performed within the above temperature range, the temperature is sufficiently higher than the boiling point of the solvent, and thus is suitable because micro-scale spherical Si particles are sufficiently dried through rapid vaporization.

The micrometer-scale Si secondary particles in a spherical form, in which the obtained Si primary nanoparticles are assembled, are mixed with an amorphous carbon precursor. In an embodiment, the mixing ratio of the secondary particles and the amorphous carbon precursor may be 80:20 to 20:80, or 60:40 to 50:50 (weight ratio).

The amorphous carbon precursor may be a polyimide resin, a furan resin, a phenol resin, a polyvinylalcohol resin, a poly(meth)acrylic acid resin, a polyurethane resin, a cellulose resin, an epoxy resin, a polystyrene resin, petroleum pitch, coal tar pitch, green coke, mesophase pitch, a coal-based oil, petroleum heavy oil, coke, or a combination thereof.

The obtained mixture is subjected to compression molding. The compression molding process may be performed under a pressure at which the micrometer-scale Si secondary particles can maintain a spherical shape, for example, 20 MPa to 150 MPa. In an embodiment, the compression molding process may be performed for 1 to 5 minutes. According to the compression molding process, the micrometer-scale spherical Si secondary particles and the amorphous carbon precursor may be strongly adhered to each other, and the amorphous carbon precursor may be easily inserted between the primary particles. Therefore, the amorphous carbon precursor may be easily inserted into the pores formed in the secondary particles, the amorphous carbon may be present at an appropriate amount (at an appropriate thickness) between the primary particles in the final active material, and, thus, the amorphous carbon may be formed into a coating layer with an appropriate thickness on the surface of the secondary particle. If the compression molding process is not performed, the adhesion of the micrometer-scale spherical secondary particles and the amorphous carbon precursor is not strong. In addition, since the amorphous carbon precursor is not easily inserted between the primary particles and is located mostly on the surface of the secondary particles, the amorphous carbon is present on the surface of the secondary particles at an excessively large thickness in the final negative electrode active material, which is not suitable.

A negative electrode active material for a rechargeable lithium battery is prepared by thermally treating the obtained compression molded product. In an embodiment, the thermal treatment process may be performed at 400 °C to 1200 °C, or 700 °C to 1000 °C. When the thermal treatment process is performed within the above temperature range, the shape of the negative electrode active material may remain spherical, and as the amorphous carbon is carbonized, the conductivity of the negative electrode active material may be improved and the initial efficiency of the battery may be improved. In an embodiment, the thermal treatment process may be performed under an $N_2$ atmosphere. According to the thermal treatment process, the amorphous carbon precursor is converted into amorphous carbon, which is integrated into the negative electrode active material.

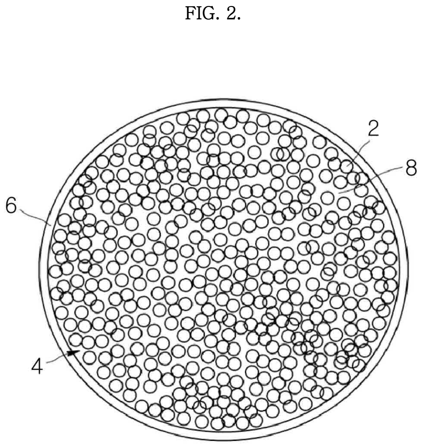

FIG. 2 is a schematic diagram of a third negative electrode active material according to an embodiment.

Referring to FIG. 2, the third negative electrode active material includes a core 4 including amorphous carbon and silicon nanoparticles 2, and a coating layer 6 surrounding the core 4, wherein the core includes pores 8.

In an embodiment, in addition to the above-described first negative electrode active material, second negative electrode active material and third negative electrode active material, the negative electrode plate may further include a fourth negative electrode active material different therefrom.

The fourth negative electrode active material may further include a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. An example of crystalline carbon may be graphite, such as amorphous, plate-shaped, flaky, spherical or fibrous natural or artificial graphite, and an example of amorphous carbon may be soft carbon or hard carbon, mesophase pitch carbide, or calcined coke.

In an embodiment, the alloy of lithium and a metal may be an alloy of lithium and a metal selected from Na, K, Rb, Cs, Fr, Be, Mg, Ca, Sr, Si, Sb, Pb, In, Zn, Ba, Ra, Ge, Al, and Sn.

As the material capable of doping and dedoping lithium, a Si-based negative electrode active material or a Sn-based negative electrode active material may be used. The Si-based negative electrode active material may be silicon, a silicon-carbon composite, $SiO_x$ ($0<x\leq2$), a Si-Q alloy (where Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, $SnO_2$, a Sn-based alloy, or a combination thereof.

The silicon-carbon composite may be a composite of silicon and amorphous carbon. According to an embodiment, the silicon-carbon composite may include silicon particles of which a surface is coated with amorphous carbon. For example, the silicon-carbon composite may include a secondary particle (core) in which silicon primary particles are agglomerated and an amorphous carbon coating layer (shell) located on the surface of the secondary particle. The amorphous carbon may also be located between the silicon primary particles, such that the silicon primary particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer located on the surface of the core.

The Si-based negative electrode active material or Sn-based negative electrode active material may be used in combination with a carbon-based negative electrode active material.

## Binder

The electrode plate for a rechargeable lithium battery may further include a binder.

In an embodiment, the binder may be included at 0.5 wt% to 5 wt% of the negative electrode plate.

The binder may adhere particles of the negative electrode active material to each other well, and adhere the negative electrode active material to the current collector well. As the binder, a non-aqueous binder, an aqueous binder, a dry binder, or a combination thereof may be used.

The non-aqueous binder may be polyvinylchloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

If an aqueous binder is used as the negative electrode binder, a cellulose-based compound that can impart viscosity may be further included. As the cellulose-based compound, one or more of carboxymethyl cellulose, hydroxypropylmethyl cellulose, methyl cellulose, or an alkali metal salt thereof may be used in combination. In an embodiment, as the alkali metal, Na, K, or Li may be used.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

**Conductive material**

The negative electrode plate for a rechargeable lithium battery may further include a conductive material.

In an embodiment, the conductive material may be included at greater than 0 wt% and 5 wt% or less of the negative electrode plate.

The conductive material imparts conductivity to the electrode, and any suitable electrically conductive material that does not cause a chemical change may be used in the configured battery. Some examples of the conductive material may include a carbon-based material, such as natural graphite, artificial graphite, carbon black, acetylene black, Ketjen black, carbon fibers, carbon nanofibers, or carbon nanotubes; a metal-based material in the form of a metal powder or metal fiber containing copper, nickel, aluminum, or silver; a conductive polymer, such as a polyphenylene derivative; or a mixture thereof.

A negative electrode current collector may be stacked on at least one of the negative electrode plate.

The negative electrode current collector may be selected from copper foil, nickel foil, stainless steel foil, titanium foil, nickel foam, copper foam, a polymer substrate coated with a conductive metal, and a combination thereof.

The negative electrode plate for a rechargeable lithium battery according to an embodiment includes a negative electrode active material and a conductive material, wherein the negative electrode active material includes a mixture of the first negative electrode active material, the second negative electrode active material, and the third negative electrode active material, and the conductive material includes carbon nanotubes.

By including the mixture as the negative electrode active material and the carbon nanotubes as the conductive material, the negative electrode plate for a rechargeable lithium battery may provide high capacity retention, high energy density, boost charging performance, and an enhanced fast charging cycle life.

The negative electrode plate may include carbon nanotubes as a conductive material, thereby reducing fast charging time, extending cycle life, and reducing the swelling of a silicon-based active material, and thus increasing energy density.

When the carbon nanotubes are included as a conductive material, the negative electrode plate may include the negative electrode active material mixture, thereby enhancing the effect of reducing fast charging time and extending cycle life.

The carbon nanotubes, as a conductive material, is a conductive material with a one-dimensional structure and form a conductive network, thereby maintaining the network among active materials during the charging and discharging of a battery, and suppressing battery degradation. In addition, the carbon nanotubes may provide the effects of reducing fast charging time, extending cycle life, and reducing the swelling of the second negative electrode active material, thereby increasing the energy density of a battery.

In an embodiment, the carbon nanotubes may have an average diameter of 0.5 to 3 nm, for example, 1 to 5 nm, an average length of 5 $\mu$m or less, for example, 1 to 2 $\mu$m, and a maximum length of 20 $\mu$m or less. Within the above ranges, the fast charging time reduction, extended cycle life, and swelling reduction effects can be provided. Here, "average diameter" refers to the average diameter of the carbon nanotubes, "diameter of a carbon nanotube" refers to the diameter of a carbon nanotube with a circular cross-section, and also refers to the maximum length of a cross-section when the cross-section of the carbon nanotube is, for example, amorphous, not circular.

In an embodiment, the carbon nanotube may have a specific surface area (SSA) of 30,000 to 100,000 $m^2$/g, for example, 50,000 to 100,000 $m^2$/g. Within the above range, a negative electrode with high conductivity can be produced by reducing the powder resistance of a slurry for a negative electrode, which includes the mixture of the negative electrode active materials.

The specific surface area (SSA) serves as a criterion for determining whether the negative electrode slurry prepared using a conductive material dispersion that is prepared using the carbon nanotubes with the specific surface area to be described below can provide low powder resistance. While SSA measurement can be easy for carbon nanotubes, for a conductive material dispersion containing carbon nanotubes, it is challenging to measure the SSA of dispersed carbon nanotubes in the dispersion.

The SSA for the carbon nanotube dispersion may be calculated using a Malvern particle size analyzer.

The carbon nanotubes may be a mixture of one or more of single-walled carbon nanotubes, and multi-walled carbon nanotubes. In an embodiment, for example, the carbon nanotubes are single-walled carbon nanotubes.

In an embodiment, the carbon nanotubes may have a BET specific surface area of 240 to 280 $m^2$/g. Within the above range, it may be easy to increase the conductivity of the slurry containing the negative electrode active material.

In an embodiment, the carbon nanotubes may be contained at 95 wt% or more, for example, 95 to 100 wt% of the conductive material.

In an embodiment, the conductive material, for example, the carbon nanotubes may be contained at 0.01 to 5 parts by weight, for example, 0.01 to 0.2 parts by weight, or 0.03 to 0.05 parts by weight with respect to 100 parts by weight of the mixture of the negative electrode active materials. Within the above range, the fast charging time reduction, extended cycle life, and swelling reduction effects can be achieved.

In an embodiment, the conductive material may be contained in the negative electrode plate at 0.01 to 5 wt%, for example, 0.01 to 0.2 wt%. Within the above range, an increase in energy density and an improvement in boost charging characteristics can be achieved, and an extended cycle life and swelling reduction can also be achieved. In an embodiment, the conductive material, for example, the carbon nanotubes, may be contained in the negative electrode plate at 0.03 to 0.05 wt%. Since the content of the active material is not reduced within the above range, battery capacity may not be reduced.

In another embodiment, a rechargeable lithium battery including the negative electrode plate for a rechargeable lithium battery is provided.

The rechargeable lithium battery may include the negative electrode plate for a rechargeable lithium battery, and a positive electrode. The negative electrode plate may be substantially the same as described above.

**Positive electrode**

A positive electrode for a rechargeable lithium battery may include a current collector and a positive electrode active material layer on the current collector. The positive electrode active material layer may include a positive electrode active material and may further include a binder and/or a conductive material. For example, the positive electrode may further include an additive that can function as a sacrificial positive electrode.

**Positive electrode active material**

The positive electrode active material may include a compound (lithiated intercalation compound) that is capable of intercalating and deintercalating lithium. In an embodiment, at least one of a composite oxide of lithium and a metal selected from cobalt, manganese, nickel, and combinations thereof may be used.

The composite oxide may be a lithium transition metal composite oxide. Some examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any of the following Chemical Formulas may be used: $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

In an embodiment, the positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

In an embodiment, an amount of the positive electrode active material may be about 90 wt% to about 99.5 wt% based on 100 wt% of the positive electrode active material layer. In an embodiment, amounts of the binder and the conductive material may be about 0.5 wt% to about 5 wt%, respectively, based on 100 wt% of the positive electrode active material layer.

The binder may attach the positive electrode active material particles well to each other and also attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any suitable material that does not cause chemical change (e.g., does not cause an undesirable chemical change in the rechargeable lithium battery) and conducts electrons can be used in the battery. Examples of the conductive material may include a carbon-based material, such as natural graphite, artificial graphite, carbon black, acetylene black, Ketjen black, a carbon fiber, a carbon nanofiber, and carbon nanotube; a metal-based material containing copper, nickel, aluminum, silver, etc., in a form of a metal powder or a metal fiber; a conductive polymer, such as a polyphenylene derivative; or a mixture thereof.

In an embodiment, Al may be used as the current collector, but the present disclosure is not limited thereto.

The rechargeable lithium battery may further include an electrolyte solution.

**Electrolyte Solution**

The electrolyte solution for a rechargeable lithium battery may include a non-aqueous organic solvent and a lithium salt.

The non-aqueous organic solvent may function as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include any of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include any of methyl acetate, ethyl acetate, n-propyl acetate, dimethyl acetate, methyl propionate, ethyl propionate, decanolide, mevalonolactone, valerolactone, caprolactone, and the like.

The ether-based solvent may include any of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like, and the aprotic solvent may include nitriles such as R-CN (wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In an embodiment, if using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)$ $(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOBP), and lithium bis(oxalato) borate (LiBOB).

The lithium rechargeable battery may further include a separator.

**Separator**

Depending on a type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film, such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both, or opposite, surfaces of the porous substrate.

The porous substrate may be a polymer film formed of any polymer selected from polyolefin, such as polyethylene and polypropylene, polyester, such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

**The rechargeable lithium battery**

The rechargeable lithium battery may be classified into any of cylindrical, prismatic, pouch-type, or coin-type batteries, and the like depending on a shape thereof.

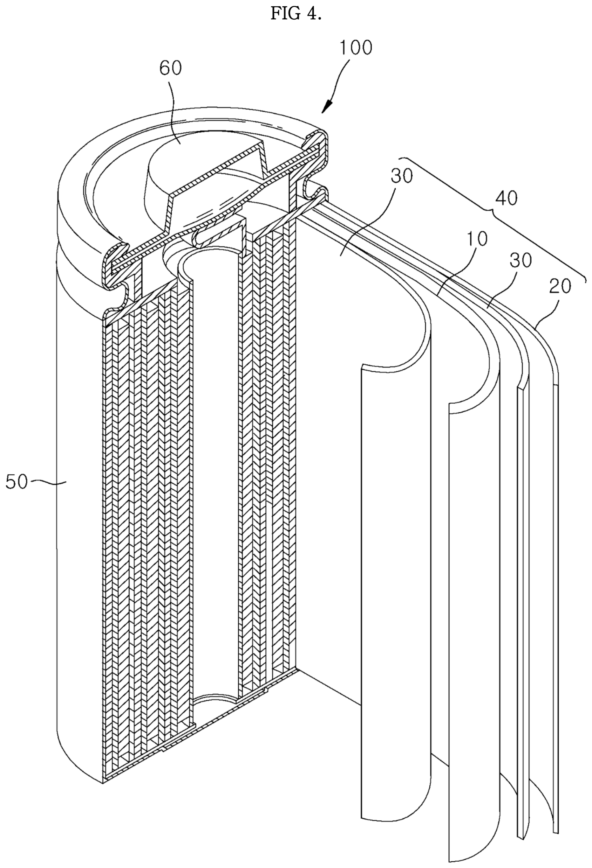

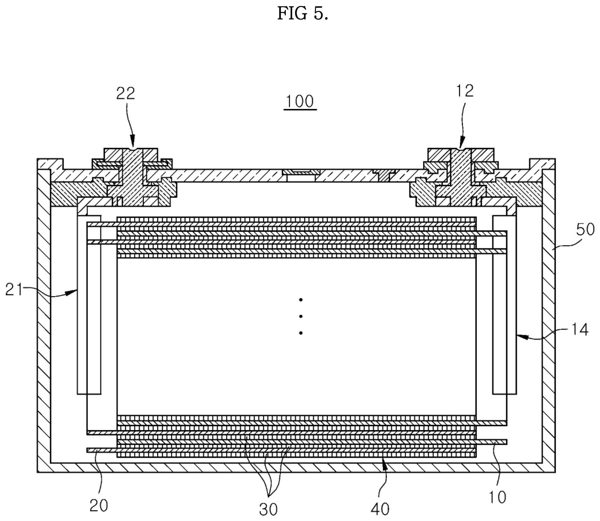

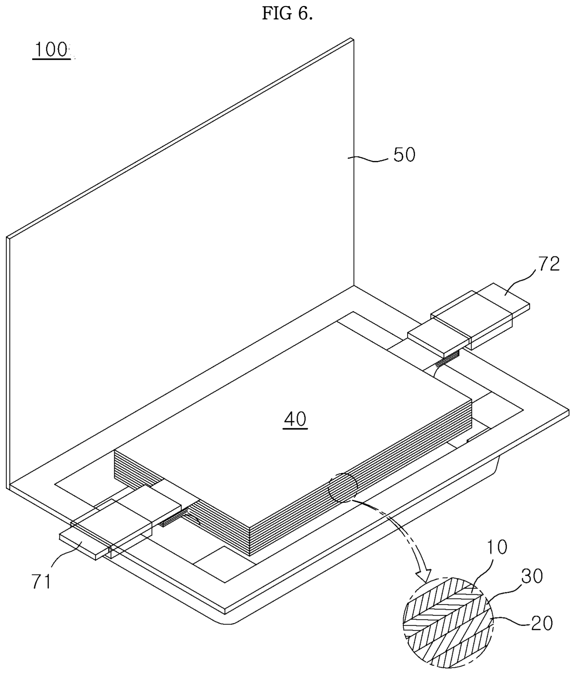

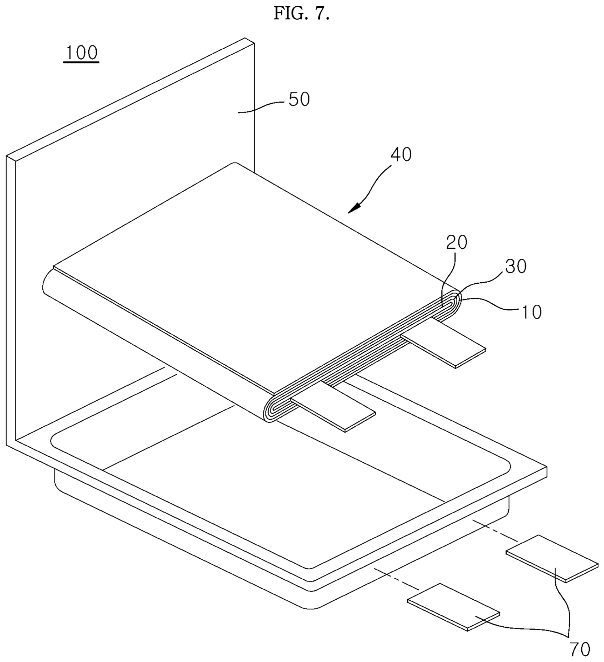

FIGS. 4 to 7 are schematic views illustrating a rechargeable lithium battery according to some embodiments. FIG. 4 shows a cylindrical battery; FIG. 5 shows a prismatic battery; and FIGS. 6 and 7 show pouch-type batteries. Referring to FIGS. 4 to 7, the rechargeable lithium battery 100 may include an electrode assembly 40 including a separator 30 between a positive electrode 10 and a negative electrode 20, and a case 50 in which the electrode assembly 40 is accommodated. The positive electrode 10, the negative electrode 20, and the separator 30 may be impregnated with an electrolyte solution (not shown). The rechargeable lithium battery 100 may include a sealing member 60 sealing the case 50, as shown in FIG. 4. As shown in FIG. 5, the rechargeable lithium battery 100 may include a positive lead tab 14, a positive terminal 12, a negative lead tab 21, and a negative terminal 22. As shown in FIGS. 6 and 7, the rechargeable lithium battery 100 may include an electrode tab 70, which may be, for example, a positive electrode tab 71 and a negative electrode tab 72 functioning as an electrical path for inducing the current formed in the electrode assembly 40 to the outside.

The rechargeable lithium battery according to an embodiment may be applied to automobiles, mobile phones, and/or various types of electric devices, as non-limiting examples.

An electronic device or an electric vehicle may contain the rechargeable lithium battery.

Herein, examples and comparative examples of the present invention will be described. However, the following examples are provided as examples, and the present invention is not limited thereto.

**Example 1**

**(1) Preparation of first negative electrode active material**

A flaky natural graphite raw material having an average particle diameter (D50) of 120 $\mu$m was ground into primary particles having a plate-like shape and a major axis length of 30 $\mu$m using an air jet milling method. The primary particles were assembled into secondary particles, which are spherical and have an average particle diameter (D50) of 7 $\mu$m, using spheroidization equipment. Pitch carbon was added to the secondary particles, mixed, and thermally treated in a 3000 °C furnace for 2 hours, thereby preparing a first negative electrode active material. The pitch carbon was added so that the natural graphite:amorphous carbon weight ratio in the first negative electrode active material was 90:10.

**(2) Second negative electrode active material**

Artificial graphite (spherical, average particle diameter (D50): 15 $\mu$m, pellet density: 1.5 g/cc, tap density: 0.9 g/cc. specific surface area BET: 1.5 $m^2$/g, orientation degree: 100) was used as a second negative electrode active material. The artificial graphite is a secondary particle in which primary particles are assembled.

**(3) Preparation of third negative electrode active material**

A dispersion was prepared by mixing silicon nanoparticles (aspect ratio: 5, average particle size: about 100 nm) and petroleum pitch (amorphous carbon) in a weight ratio of 70:30 in an isopropyl alcohol solvent and dispersing the resulting mixture using a homogenizer. The resulting dispersion was sprayed at 120 °C using a spray dryer. The resulting spray-dried product (precursor) was pressed at 50 MPa using a powder press, thermally treated at 1000 °C in a furnace under an $N_2$ atmosphere, thereby obtaining a reaction product that includes a core containing amorphous carbon and silicon nanoparticles, and a coating layer containing amorphous carbon and formed on the surface of the core. The resulting reaction product was ground and classified by a 325 mesh, thereby preparing a third negative electrode active material (C-1).

The resulting third negative electrode active material had an interparticle distance between the silicon particles of 65 nm, an average particle diameter (D50) of 8.3 $\mu$m, and a total pore volume of pores with a size of 200 nm or less of 2.95 x $10^{-2}$ $cm^3$/g.

The interparticle distance between the silicon nanoparticles was obtained by analyzing the cross-section of silicon nanoparticles through TEM, and measuring the center-to-center distance between the silicon nanoparticles.

A pore volume was measured by placing the silicon nanoparticles into pore measurement equipment (Product name: ASAP series, Manufacturer: Micromeritics Instrument Corp.), heating them up to 623 K at 10 K/min, pretreating them for 2 to 10 hours (vacuum of 100 mmHg or less), and performing measurement in liquid nitrogen at a relative pressure ($P/P_o$) adjusted to 0.01 or less. Specifically, the measurement was carried out by nitrogen adsorption, was measured at 32 points from a relative pressure of 0.01 to 0.995, and then nitrogen desorption was measured at 24 points to a relative pressure of 0.14. Here, BET calculations can generally be made to the point at which the relative pressure ($P/P_o$) is 0.1.

(4) A mixture of the negative electrode active materials was prepared by mixing 47 wt% of the first negative electrode active material, 47 wt% of the second negative electrode active material, and 6 wt% of the third negative electrode active material.

A negative electrode active material slurry was prepared by mixing 97.5 wt% of the mixture of the negative electrode active materials, 1.5 wt% of styrene butadiene rubber as a binder, and 1.0 wt% of carboxy methylcellulose as an additive in distilled water.

A negative electrode plate was manufactured by coating a copper current collector with the negative electrode active material slurry, and drying and rolling the slurry-coated current collector.

A half-cell was manufactured using the negative electrode plate, a lithium metal counter electrode, and an electrolyte. The electrolyte is a mixed solvent of ethylene carbonate and dimethyl carbonate (3:7 by volume) in which 1M $LiPF_6$ is dissolved.

**Example 2**

A first negative electrode active material was prepared in the same manner as in Example 1, except that the spheroidization conditions in Example 1 were modified. A negative electrode and a half-cell were manufactured in the same manner as in Example 1 using the prepared first negative electrode active material.

**Example 3**

A first negative electrode active material was prepared in the same manner as in Example 1, except that the spheroidization conditions in Example 1 were modified. A negative electrode and a half-cell were manufactured in the same manner as in Example 1 using the prepared first negative electrode active material.

**Examples 4 and 5**

Negative electrodes and half-cells were manufactured in the same manner as in Example 1, except that the weight ratio of each component in Example 1 was modified as shown in Table 1 below.

**Comparative Example 1**

A first negative electrode active material was prepared in the same manner as in Example 1, except that pitch carbon was not added in the preparation of the first negative electrode active material in Example 1. A negative electrode and a half-cell were manufactured in the same manner as in Example 1 using the prepared first negative electrode active material.

**Comparative Example 2**

A flaky natural graphite raw material with an average particle diameter (D50) of 120 $\mu$m or more was pulverized into primary particles with an average particle diameter (D50) of 120 $\mu$m by an air jet milling method. The primary particles were assembled into secondary particles with an average particle size of 20 $\mu$m using spheroidization equipment. A first negative electrode active material was prepared by adding pitch carbon to the secondary particles and mixing them and thermally treating the resulting mixture in a 1200 °C furnace for 2 hours. The pitch carbon was added so that the natural graphite:amorphous carbon weight ratio in the first negative electrode active material was 90:10.

A negative electrode and a half-cell were manufactured in the same manner as in Example 1 using the prepared first negative electrode active material.

**Comparative Example 3**

A flaky natural graphite raw material with an average particle diameter (D50) of 80 $\mu$m was pulverized into primary particles with a major axis length of 7 $\mu$m by an air jet milling method. The primary particles were assembled into spherical secondary particles with an average particle diameter (D50) of 15.6 $\mu$m using spheroidization equipment. A first negative electrode active material was prepared by adding pitch carbon to the secondary particles and mixing them and thermally treating the resulting mixture in a 1200 °C furnace for 2 hours. The pitch carbon was added so that the natural graphite:amorphous carbon weight ratio in the first negative electrode active material was 90:10.

A negative electrode and a half-cell were manufactured in the same manner as in Example 1 using the prepared first negative electrode active material.

**Comparative Example 4**

A negative electrode and a half-cell were manufactured in the same manner as in Example 1, except that a silicon oxide (C-2) was used instead of the third negative electrode active material used in Example 1.

**(Experimental Example 1): Evaluation of first negative electrode active material Pellet density (units: g/cc):**

A pellet density was measured using a pellet density meter, Carver 4350.L (CARVER). After adding 1.0 g each of the first negative electrode active materials of the Examples and Comparative Examples to a mold, the density of a powder was measured while maintaining the mold under a pressure of 2.0 tons for 30 seconds.

**Orientation degree:**

An orientation degree was measured using a XRD analyzer, X'Pert Pro (PANalytical). A ratio of the diffraction peak intensity I (002) of the (002) plane to the diffraction peak intensity I (110) of the (110) plane was measured for each of the first negative electrode active materials of the Examples and Comparative Examples by X-ray diffraction analysis using CuKα radiation.

**d002 (units: Å):**

d002 was measured using an XRD analyzer, X'Pert Pro (PANalytical). The interplanar spacing of the (002) plane was measured for each of the first negative electrode active materials of the Examples and Comparative Examples by X-ray diffraction analysis using CuKα radiation.

**Sphericity:**

Sphericity was measured using a sphericity analyzer, Morphologi 4 (Malvern). For each of the first negative electrode active materials of the Examples and Comparative Examples, the A value and the B value in Equation 1 were obtained, followed by calculating the sphericity according to Equation 1.

**Hg cumulative pore volume (units: mL/g):**

An Hg cumulative pore volume was measured for each of the first negative electrode active materials of the Examples and Comparative Examples using an Hg Intrusion Porosimeter (AutoPore V (Micromertics), Mercury intrusion porosimetry). The negative electrode active material was placed in a specialized sample cup, surrounded by mercury, and a pressure in the range of 0.2 to 60,000 psi was applied to intrude mercury into the negative electrode active material. The mercury porosity was then measured by monitoring the change in volume of mercury in the capillary stem reservoir. The size of pores that can be measured by the above-described method is 0.01 μm to 100 μm, and, generally, in the negative electrode active material, pores with a size of 0.01 μm or more and 5 μm or less are considered as pores in the active material.

**(Experimental Example 2) Evaluation of battery characteristics**

The charge and discharge capacities were measured by charging and discharging the manufactured half-cells at 0.1C. The measured discharge capacities are shown in Table 1 below, and the Coulombic efficiency (discharge capacity/charge capacity x 100%) was measured.
The manufactured half-cells were subjected to one cycle of 0.2C constant current (CC)/constant voltage (CV) charging and 0.2C discharging, one cycle of 0.5C CC charging and 0.2C discharging, one cycle of 1C CC charging and 0.2C discharging, and one cycle of 2C CC charging and 0.2C discharging, and then charging characteristics were calculated. Here, the charging conditions were a 10 mV cutoff for the CC phase and a 15-hour cutoff for the CV phase, and the discharging condition was a 1.5V cutoff. The charging characteristics were measured at each C-rate. The charging characteristics were expressed by calculating the ratio of the 2C CC charge capacity to the 0.2C CC charge capacity.

**Energy density (units: Wh/L):**

$$(\text{Cell capacity (Ah)} \times \text{Cell average voltage (V)}) / \text{Cell volume (L)}$$

The energy density is a value obtained by dividing the product of the discharge capacity obtained by discharging at a C-rate of 0.1C to 1C within the operating voltage range of a battery cell and the average voltage of the corresponding cell by the cell's volume.

**Fast charging time (units: sec):**

Fast charging time refers to the time required to charge a battery from SOC (state of charge) 8 to 80% by constant current charging, and the fast charging time was evaluated by identifying a charging pattern that does not reach the upper voltage limit of 4.2V during charging.

**Fast charging cycle life (units: cycles):**

One cycle is defined as charging from SOC 8 to 80% and discharging at a constant current of 0.33C to a voltage of 2.8V, based on the determined fast charging time, and the large cell was evaluated through cycling until SOH (state of health) 80%.

Table 1

| | | Example | | | | | Comparative Example | | | |
|---|---|---|---|---|---|---|---|---|---|---|
| | | 1 | 2 | 3 | 4 | 5 | 1 | 2 | 3 | 4 |
| First negati ve electr ode active materi al | Major axis length of primary particle ($\mu$m) | 30 | 30 | 30 | 30 | 30 | 30 | 120 | 7 | 30 |
| | D50 of second ary particle ($\mu$m) | 7 | 10 | 5 | 7 | 7 | 7 | 20 | 15.6 | 7 |
| | Pellet density | 1.75 | 1.80 | 1.60 | 1.75 | 1.75 | 1.9 | 1.8 | 1.78 | 1.75 |
| | Orienta tion degree | 60 | 80 | 55 | 60 | 60 | 70 | 110 | 120 | 60 |
| | d002(Å) | 3.3569 | 3.3567 | 3.3573 | 3.3569 | 3.3569 | 3.3558 | 3.3559 | 3.3561 | 3.3569 |
| | Spheric ity | 0.95 | 0.95 | 0.90 | 0.95 | 0.95 | 0.95 | 0.95 | 0.95 | 0.95 |
| | Hg cumula | 0.035 | 0.041 | 0.037 | 0.035 | 0.035 | 0.158 | 0.056 | 0.066 | 0.035 |
| | tive pore volume (<1um, mL/g) | | | | | | | | | |
| Third negative electrode active material | | C-1 | C-1 | C-1 | C-1 | C-1 | C-1 | C-1 | C-1 | C-2 |
| Weight ratio | | 47:4 7:6 | 47:4 7:6 | 47:4 7:6 | 70.5:23 .5:6 | 23.5:70 .5:6 | 47:4 7:6 | 47:4 7:6 | 47:4 7:6 | 47:4 7:6 |
| Energy density | | 750 | 755 | 745 | 755 | 750 | 765 | 765 | 730 | 750 |
| Fast charging time | | 900 | 120 | 600 | 900 | 900 | 1500 | 1200 | 1380 | 1200 |
| Fast charging cycle life | | 1500 | 1400 | 1550 | 1350 | 1400 | 1200 | 1300 | 800 | 1200 |
| *Weight ratio: first negative electrode active material: second negative electrode active material: third negative electrode active material | | | | | | | | | | |

The boost charging performance should be evaluated by considering both fast charging time and fast charging cycle life.

As shown in Table 1, the negative electrode active material for a rechargeable lithium battery of each of the Examples can provide high energy density, and sufficiently provide boost charging performance due to a short fast charging time and a long fast charging cycle life.

However, as shown in Table 1, it is confirmed that, since the negative electrode active material of each of the Comparative Examples does not satisfy the composition of the present invention, fast charging time increases and fast charging cycle life decreases, resulting in significantly lower boost charging performance.

**Example 6**

**(1) Preparation of first negative electrode active material**

A flaky natural graphite raw material with an average particle diameter (D50) of 120 $\mu$m was pulverized into primary particles with a major axis length of 20 to 30 $\mu$m by an air jet milling method. The primary particles were assembled into spherical secondary particles with an average particle diameter (D50) of 7 $\mu$m using spheroidization equipment. A first negative electrode active material was prepared by adding pitch carbon to the secondary particles and mixing them and thermally treating the resulting mixture in a 3000 °C furnace for 2 hours. The pitch carbon was added so that the natural graphite:amorphous carbon weight ratio in the first negative electrode active material was 90:10.

(2) As a second negative electrode active material, artificial graphite (spherical, average particle diameter (D50): 15 $\mu$m, pellet density: 1.5 g/cc, tap density: 0.9 g/cc. specific surface area BET: 1.5 m$^2$/g, orientation degree: 100) was used. The artificial graphite is a secondary particle in which primary particles are assembled.

**(3) Preparation of third negative electrode active material**

A dispersion was prepared by mixing silicon nanoparticles (aspect ratio: 5, average particle size: about 100 nm) and petroleum pitch (amorphous carbon) in a weight ratio of 70:30 in an isopropyl alcohol solvent and dispersing the resulting mixture using a homogenizer. The resulting dispersion was sprayed at 120 °C using a spray dryer. The resulting spray-dried product (precursor) was pressed at 50 MPa using a powder press, thermally treated at 1000 °C in a furnace under an N$_2$ atmosphere, thereby obtaining a reaction product that includes a core containing amorphous carbon and silicon nanoparticles, and a coating layer containing amorphous carbon and formed on the surface of the core. The resulting reaction product was ground and classified by a 325 mesh, thereby preparing a third negative electrode active material (C-1).

The resulting third negative electrode active material had an interparticle distance between the silicon nanoparticles of 65 nm, an average particle diameter (D50) of 8.3 $\mu$m, and a total pore volume of pores with a size of 200 nm or less of 2.95 x 10$^{-2}$ cm$^3$/g.

The interparticle distance between silicon nanoparticles was obtained by analyzing the cross-section of silicon nanoparticles through TEM and measuring the center-to-center distance between silicon nanoparticles.

A pore volume was measured by placing the silicon nanoparticles into pore measurement equipment (Product name: ASAP series, Manufacturer: Micromeritics Instrument Corp.), heating the silicon nanoparticles to 623 K at 10 K/min, pretreating the silicon nanoparticles for 2 to 10 hours (vacuum under 100 mmHg or less), and performing measurement in liquid nitrogen at a relative pressure (P/P$_o$) adjusted to 0.01 or less. Specifically, the measurement was carried out by nitrogen adsorption was measured at 32 points from a relative pressure of 0.01 to 0.995, and then nitrogen desorption was measured at 24 points to a relative pressure of 0.14. Here, BET calculations can generally be made to the point at which the relative pressure (P/P$_o$) is 0.1.

(4) A mixture of the negative electrode active materials was prepared by mixing 47 parts by weight of the first negative electrode active material, 47 parts by weight of the second negative electrode active material, and 6 parts by weight of the third negative electrode active material, based on 100 parts by weight of the mixture of the negative electrode active materials.

A negative electrode active material slurry was prepared by mixing 97.5 wt% of the mixture of the negative electrode active materials, 0.04 wt% of single-walled carbon nanotubes (SWCNT) as a conductive material, and 2.46 wt% of styrene butadiene rubber as a binder in distilled water.

A negative electrode plate was manufactured by coating a copper current collector with the negative electrode active material slurry, drying, and then rolling the resulting current collector.

A half-cell was manufactured using the negative electrode plate, a lithium metal counter electrode, and an electrolyte. The electrolyte is a mixed solvent of ethylene carbonate and dimethyl carbonate (3:7 by volume) in which 1M LiPF$_6$ is dissolved.

**Example 7**

A first negative electrode active material was prepared in the same manner as in Example 6, except that the spheroidization conditions in Example 6 were modified. A negative electrode and a half-cell were manufactured in the same manner as in Example 6 using the prepared first negative electrode active material.

**Example 8**

A first negative electrode active material was prepared in the same manner as in Example 6, except that the spheroidization conditions in Example 6 were modified. A negative electrode and a half-cell were manufactured in the same manner as in Example 6 using the prepared first negative electrode active material.

**Examples 9 and 10**

Negative electrodes and half-cells were manufactured in the same manner as in Example 6, except that the weight ratio of each component in Example 6 was modified as shown in Table 2 below.

**Example 11**

An electrode plate and a half-cell were manufactured in the same manner as in Example 6, except that Denka black (carbon black, D2) was used instead of carbon nanotubes as a conductive material in Example 6.

**(Experimental Example 3): Evaluation of first negative electrode active material**

A pellet density (units: g/cc), an orientation degree, a d002 (units: Å), an Hg cumulative pore volume (units: mL/g), and sphericity were evaluated in the same manner as in Experimental Example 1.

**(Experimental Example 4) Evaluation of battery characteristics**

**Capacity (units: mAh/g) and charge C-rate (units: %)**

The manufactured half-cells were charged and discharged at 0.1C to measure charge and discharge capacities. The measured discharge capacity is shown in Table 1 below, and the Coulombic efficiency (discharge capacity/charge capacity x 100%) was measured.

The manufactured half-cells were subjected to one cycle of 0.2C constant current (CC)/constant voltage (CV) charging and 0.2C discharging, one cycle of 0.5C CC charging and 0.2C discharging, one cycle of 1C CC charging and 0.2C discharging, and one cycle of 2C CC charging and 0.2C discharging, and then charging characteristics were calculated. Here, the charging conditions were a 10 mV cutoff for the CC phase and a 15-hour cutoff for the CV phase, and the discharging condition was a 1.5V cutoff. The charging characteristics were measured at each C-rate. The charging characteristics were expressed by calculating the ratio of the 2C CC charge capacity to the 0.2C CC charge capacity.

**Fast charging time (units: sec):**

Fast charging time refers to the time required to charge a battery from SOC 8 to 80% by constant current charging, and it was evaluated by identifying a charging pattern that does not reach the upper voltage limit of 4.2V during charging.

**Fast charging cycle life (units: cycle):**

One cycle is defined as charging from SOC 8 to 80% and discharging at a constant current of 0.33C to a voltage of 2.8V, based on the determined fast charging time, and the large cell was evaluated through cycling until SOH 80%.

**Expansion rate (units: %)**

Expansion rates were measured using a thickness monitoring system (TMS).
Each of the cells manufactured according to the Examples and Comparative Examples was evaluated by charging and discharging (0.5C/0.5C) at 45 °C under the conditions including a charge voltage of 4.35V and a discharge voltage of 2.8V while continuously monitoring the cell thickness in real time during the charge and discharge cycles. The expansion rate was assessed by comparing the thickness increase at 50 cycles relative to the thickness at one cycle.

Expansion rate = (Cell thickness after 50th cycle - Cell thickness after 1st cycle) / Cell thickness after 1st cycle x 100

Table 2

| | | Example | | | | | |
|---|---|---|---|---|---|---|---|
| | | 6 | 7 | 8 | 9 | 10 | 11 |
| First negative electr ode active materi al | Major axis length of primary particle | 30 | 30 | 30 | 30 | 30 | 30 |
| | D50 of secondary particle | 7 | 10 | 5 | 7 | 7 | 7 |
| | Pellet density | 1.75 | 1.80 | 1.60 | 1.75 | 1.75 | 1.75 |
| | Orientation degree | 60 | 80 | 55 | 60 | 60 | 60 |
| | d002 | 3.3569 | 3.3567 | 3.3573 | 3.3569 | 3.3569 | 3.3569 |
| | Sphericity | 0.95 | 0.95 | 0.90 | 0.95 | 0.95 | 0.95 |
| | Hg cumulative pore volume | 0.035 | 0.041 | 0.037 | 0.035 | 0.035 | 0.035 |
| Third negative electrode active material | | C-1 | C-1 | C-1 | C-1 | C-1 | C-1 |
| Conductive material | | D-1 | D-1 | D-1 | D-1 | D-1 | D-2 |
| Content of conductive material | | 0.04 | 0.04 | 0.04 | 0.04 | 0.04 | 0.04 |
| Weight ratio | | 47:47:6 | 47:47:6 | 47:47:6 | 70.5:23 .5:6 | 23.5:70 .5:6 | 47:47:6 |
| Capacity | | 426 | 428 | 424 | 431 | 421 | 426 |
| C-rate | | 44 | 39 | 49 | 46.5 | 41.5 | 37 |
| Fast charging time | | 900 | 1080 | 780 | 900 | 900 | 1200 |
| Fast charging cycle life | | 1800 | 1600 | 2100 | 1950 | 1700 | 1100 |
| Expansion rate | | 5 | 6 | 5 | 3 | 6 | 12 |

*In Table 2,
C-1: Silicon-carbon composite
D-1: SWCNT
D-2: Denka black
Weight ratio: first negative electrode active material: second negative electrode active material: third negative electrode active material

As shown in Table 2, the negative electrode plates for a rechargeable lithium battery of the Examples provide the effects of reducing swelling of a silicon-based active material, reducing fast charging time, extending cycle life, and increasing energy density, and thus can exhibit excellent rechargeable lithium battery performance.

Although some embodiments of the present invention have been described above, the present invention is not limited thereto, and it is possible to implement various modifications within the scope of the claims, the detailed description of the present invention, and the accompanying drawings. It is to be understood that such modifications fall within the scope of the present invention.

**Claims**

1. A negative electrode plate comprising:

a negative electrode active material comprising a mixture of a first negative electrode active material, a second negative electrode active material, and a third negative electrode active material,

wherein the first negative electrode active material comprises natural graphite containing secondary particles in which primary particles are arranged, and a coating layer that surrounds the secondary particles and contains amorphous carbon, and the first negative electrode active material has an orientation degree of 90 or less and a d002 in a range from 3.356 to 3.360 Å,

the second negative electrode active material comprises artificial graphite,

the third negative electrode active material comprises a core containing silicon nanoparticles and amorphous carbon, and an amorphous carbon coating layer that surrounds the core and contains amorphous carbon, and the negative electrode plate is for a rechargeable lithium battery.

2. The negative electrode plate as claimed in claim 1, wherein the first negative electrode active material has an Hg cumulative pore volume of 0.01 to 0.06 mL/g.

3. The negative electrode plate as claimed in claim 1 or 2, wherein the first negative electrode active material has a pellet density of 1.60 to 1.80 g/cc.

4. The negative electrode plate as claimed in any of the preceding claims, wherein the first negative electrode active material has a sphericity of 0.85 or greater.

5. The negative electrode plate as claimed in any of the preceding claims, wherein a ratio of a major axis length of the primary particles to an average particle diameter (D50) of the secondary particles is greater than 2 and 10 or less.

6. The negative electrode plate as claimed in any of the preceding claims, wherein the primary particles are flaky, and the secondary particles are spherical.

7. The negative electrode plate as claimed in any of the preceding claims, wherein a major axis length of the primary particles is in a range from 10 to 200 $\mu$m.

8. The negative electrode plate as claimed in any of the preceding claims, wherein an average particle diameter (D50) of the secondary particles is 30 $\mu$m or less.

9. The negative electrode plate as claimed in any of the preceding claims, wherein amorphous carbon is additionally present on a surface of the primary particles.

10. The negative electrode plate as claimed in any of the preceding claims,

wherein the natural graphite comprises flaky natural graphite; and/or
wherein the amorphous carbon comprises a mixture of one or more selected from soft carbon, hard carbon, mesophase pitch carbide, and calcined coke.

11. The negative electrode plate as claimed in any of the preceding claims, wherein the natural graphite and the amorphous carbon are included in a weight ratio of 90:10 to 75:25 with respect to 100 parts by weight of a total of the natural graphite and the amorphous carbon of the first negative electrode active material.

12. The negative electrode plate as claimed in any of the preceding claims, wherein an interparticle distance between the silicon nanoparticles contained in the core of the third negative electrode active material is 100 nm or less.

13. The negative electrode plate as claimed in any of the preceding claims,

wherein an average particle diameter (D50) of the silicon nanoparticles is 50 nm to 150 nm; and/or
wherein the third negative electrode active material has a total pore volume of pores with a size of 200 nm or less of $3.0 \times 10^{-2}$ cm$^3$/g or less; and/or
wherein the silicon nanoparticles and the amorphous carbon are included in a weight ratio of 80:20 to 20:80 with respect to 100 parts by weight of a total of the silicon nanoparticles and the amorphous carbon in the third negative electrode active material.

14. The negative electrode plate as claimed in any of the preceding claims,

wherein the mixture comprises 20 to 75 wt% of the first negative electrode active material, 20 to 75 wt% of the second negative electrode active material, and 1 to 15 wt% of the third negative electrode active material; and/or wherein the negative electrode plate further comprises a conductive material, the conductive material comprising carbon nanotubes, preferably wherein the carbon nanotubes are included in the negative electrode plate at 0.01 to 5 wt%.

15. A rechargeable lithium battery comprising:

the negative electrode plate as claimed in any of the preceding claims; and
a positive electrode.

FIG. 1.

FIG. 2.

FIG. 3.

FIG 4.

FIG 5.

FIG 6.

FIG. 7.

Europäisches
Patentamt

European
Patent Office

Office européen
des brevets

# EUROPEAN SEARCH REPORT

**Application Number**

EP 25 21 9330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 228 025 A1 (SAMSUNG SDI CO LTD [KR]) 16 August 2023 (2023-08-16) | 1,7-11, 13,15 | INV. H01M4/134 |
| Y | * paragraphs [0009], [0015] * <br> * paragraph [0012] * <br> * paragraphs [0014], [0015] * <br> * paragraphs [0046] - [0051] * <br> * paragraphs [0007] - [0009] * <br> * paragraphs [0012], [0040] * <br> * paragraphs [0034], [0035] * <br> * paragraph [0033] * <br> * paragraph [0048] * <br> * paragraph [0040] * <br> * paragraphs [0049], [0050] * <br> * claim 12 * | 2,3 | H01M4/36 <br> H01M4/38 <br> H01M4/583 <br> H01M4/587 <br> H01M4/62 <br> H01M4/133 |
| X | EP 3 863 083 A1 (SAMSUNG SDI CO LTD [KR]) 11 August 2021 (2021-08-11) <br> * paragraphs [0009], [0014], [0015], [0040] * <br> * paragraphs [0026] - [0032] * <br> * paragraphs [0034], [0126] - [0133] * <br> * table 1 * <br> * paragraph [0042] * <br> * paragraph [0039] * <br> * claim 11 * | 1,4,5,8, 10,11,15 | |
| | | | **TECHNICAL FIELDS SEARCHED (IPC)** <br><br> H01M |
| X | CN 118 825 214 A (SAMSUNG SDI CO LTD) 22 October 2024 (2024-10-22) <br> * paragraphs [0005] - [0011], [0027] - [0030] * <br> * paragraph [0027] * <br> * paragraph [0032] * <br> * paragraphs [0030], [0102] * <br> * paragraph [0029] * <br> * paragraph [0104] * <br> * claim 11 * | 1,6,10, 12-15 | |

-/--

The present search report has been drawn up for all claims

| Place of search | Date of completion of the search | Examiner |
|---|---|---|
| The Hague | 24 February 2026 | Martin, Andréa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

Europäisches
Patentamt
European
Patent Office
Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 266 397 A1 (SAMSUNG SDI CO LTD [KR]) 25 October 2023 (2023-10-25) * paragraphs [0025] - [0027] * * paragraph [0005] * * paragraph [0022] * ----- | 2,3 | |
| | | | **TECHNICAL FIELDS SEARCHED (IPC)** |

The present search report has been drawn up for all claims

| Place of search | Date of completion of the search | Examiner |
|---|---|---|
| The Hague | 24 February 2026 | Martin, Andréa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 9330

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2026

| Patent document cited in search report | | Publication date | Patent family member(s) | | Publication date |
|---|---|---|---|---|---|
| EP 4228025 | A1 | 16-08-2023 | EP | 4228025 A1 | 16-08-2023 |
| | | | KR | 20230119523 A | 16-08-2023 |
| | | | US | 2023253553 A1 | 10-08-2023 |
| EP 3863083 | A1 | 11-08-2021 | EP | 3863083 A1 | 11-08-2021 |
| | | | KR | 20210101601 A | 19-08-2021 |
| | | | US | 2021249648 A1 | 12-08-2021 |
| | | | US | 2025070127 A1 | 27-02-2025 |
| CN 118825214 | A | 22-10-2024 | CN | 118825214 A | 22-10-2024 |
| | | | EP | 4451364 A1 | 23-10-2024 |
| | | | KR | 20240153838 A | 24-10-2024 |
| | | | US | 2024347704 A1 | 17-10-2024 |
| EP 4266397 | A1 | 25-10-2023 | EP | 4266397 A1 | 25-10-2023 |
| | | | JP | 2024515948 A | 11-04-2024 |
| | | | KR | 20230030409 A | 06-03-2023 |
| | | | US | 2024120461 A1 | 11-04-2024 |
| | | | WO | 2023027431 A1 | 02-03-2023 |

EPO FORM P0459

For more details about this annex : see Official Journal of the European Patent Office, No. 12/82

**REFERENCES CITED IN THE DESCRIPTION**

**Patent documents cited in the description**

- KR 1020240175701

- KR 1020240175705